# EUROPÄISCHE PATENTANMELDUNG

(11) **EP 3 287 052 A1**
(43) Veröffentlichungstag der Anmeldung: **28.02.2018**
(21) Anmeldenummer: 17405005.4
(22) Anmeldetag: 18.05.2017
(51) Int. Cl.: A47J 37/07, A47J 36/06

(54) **GRILLDECKEL - WINDSCHUTZ FÜR DEN GRILL**

(30) Priorität: 24.08.2016 CH 10852016
(71) Anmelder: Schuler Systemtechnik GmbH, 6462 Seedorf (CH)
(72) Erfinder: Schuler, Peter, 6462 Seedorf (CH)

(57) **Zusammenfassung**

Schnell, und einfacher Windschutz für den Grill damit ein effizientes grillieren möglich ist.

## Beschreibung

### 2. Technisches Gebiet

Die Erfindung betrifft einen Deckel der dem Grill einen Windschutz gibt.

### 3. Darstellung der Erfindung

Bekannt sind Koffergrill die keine Windschutz haben und somit viel Gas und Zeit brauchen bis das Grillgut gar ist. Der neue Grilldeckel gibt den gewünschten Windschutz. Er ist am besteheliden Grill einfach mit 2 Schrauben zu montieren.

### 4. Zeichnungen

### Planbeilage Grilldeckel.

### 5. Ausführung der Erfindung

Wenn der Koffergrill aufgestellt ist, kann man den Deckel einfach und schnell am Grill einhängen. Zuerst müssen am bestehenden Grill 2 Schrauben montiert werden. Der Grilldeckel hat 2 Löcher (rechts und links) damit wird er an den vorher montierten Schrauben eingehängt.

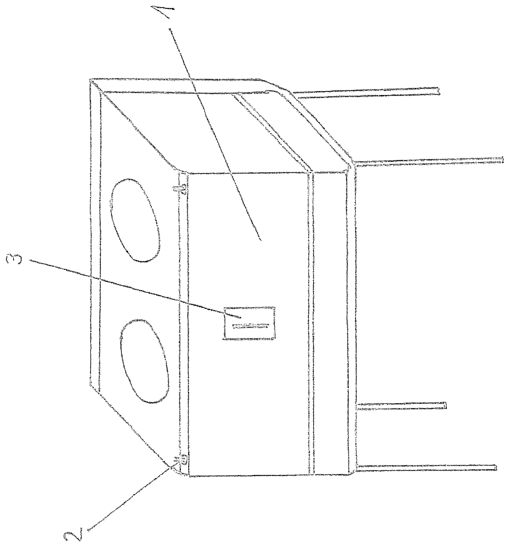

## Patentansprüche

1. **Unabhängiger Patentanspruch**
Der Grilldeckel (1) mit zwei Löchern (je eins rechst und links), dem Grill (2) mit zwei einmalig montierten Schrauben eingehängt wir. Der Griff (3) ist Hitze geschützt.

2. **Abhängiger Patentanspruch**
Der Grilldeckel gemäss Anspruch 1, **dadurch gekennzeichnet, dass** der Deckel (1) einfach mit einem Handgilff abnehmbar ist.

3. **Abhängiger Patentanspruch**
Der Grilldeckel gemäss Anspruch 2, **dadurch gekennzeichnet, dass** am Grill zwei Schrauben (2) montiert sind.

4. **Abhängiger Petentanspruch**
Der Grilldeckel gemäss Anspruch 3, **dadurch gekennzeichnet, dass** der Griff des Grilldeckels-(3) Hitzebeständig ist.
